# FASCICULE DE BREVET EUROPEEN

(11) **EP 2 240 417 B1**
(45) Date de publication et mention de la délivrance du brevet: **17.08.2011**
(21) Numéro de dépôt: 09711067.0
(22) Date de dépôt: 02.02.2009
(51) Int. Cl.: C03B 5/235

(54) **PROCEDE DE CHAUFFAGE D'UN FOUR VERRIER BAS NOX A HAUT TRANSFERT DE CHALEUR**
VERFAHREN ZUR ERHITZUNG EINES GLASOFENS MIT NIEDRIGER NOX-EMISSION UND HOHER WÄRMEÜBERTRAGUNG
METHOD FOR HEATING A LOW-NOX GLASS FURNACE HAVING HIGH HEAT TRANSFER

(30) Priorité: 08.02.2008 FR 0850814
(43) Date de publication de la demande: 20.10.2010
(73) Titulaire: Saint-Gobain Glass France, 92400 Courbevoie (FR)
(72) Inventeur: ROUCHY, Patrice, F-92420 Vaucresson (FR); NETTER, Paul, F-75009 Paris (FR)
(74) Mandataire: Colombier, Christian
(86) Numéro de dépôt international: PCT/FR2009/050150
(87) Numéro de publication internationale: WO 2009/101312

(56) Documents cités:
- EP-A- 0 947 768
- WO-A-2007/048429
- FR-A- 2 328 372
- JP-A- 2003 269 709
- US-A- 4 946 382
- US-A- 5 387 100

## Description

L'invention concerne un four verrier à brûleurs transversaux équipé de régénérateurs tel que ceux utilisés pour produire le verre fondu transformé en verre plat dans une unité de flottage du verre sur un bain de métal, généralement à base d'étain.

La plupart des fours verrier à flamme sont confrontés à des problèmes d'émission, non désirée, d'oxyde d'azote (NOx) dans les fumées de combustion. Ils doivent de plus émettre le moins de monoxyde de carbone possible et fonctionner de manière efficace. Le four fonctionne de manière efficace s'il a une forte productivité (forte tirée) d'un verre de bonne qualité et une longue durée de vie tout en consommant le moins d'énergie possible. La durée de vie du four peut être affecté par l'endommagement des réfractaires, notamment en raison de surchauffes locales, ledit endommagement pouvant de plus entraîner la pollution du verre fabriqué. En effet, une surchauffe locale peut entraîner la fusion du réfractaire dont les coulures peuvent se mélanger au verre en produisant ce que l'homme du métier appelle des larmes (« knot » en anglais) dans le verre.

Les NOx ont une influence néfaste à la fois sur l'être humain et sur l'environnement. En effet, d'une part le NO₂ est un gaz irritant à la source des maladies respiratoires. D'autre part, au contact de l'atmosphère, ils peuvent former progressivement des pluies acides. Enfin, ils engendrent une pollution photochimique puisqu'en combinaison avec les composés organiques volatiles et le rayonnement solaire, les NOx sont à l'origine de la formation de l'ozone dite troposphérique dont l'augmentation de concentration à basse altitude devient nocive pour l'être humain, surtout en période de forte chaleur. C'est pourquoi les normes en vigueur sur l'émission de NOx deviennent de plus en plus exigeantes. Du fait même de l'existence de ces normes, les fabricants et les exploitants de four, tels que ceux des fours verriers, se préoccupent, de manière constante, de limiter au maximum les émissions de NOx, de préférence à un taux inférieur à 800, voire inférieur à 700 mg par Nm³ de fumées.

La température influe sur la formation des NOx. En effet, au-delà de 1300°C l'émission des NOx croit de manière exponentielle. Plusieurs techniques ont déjà été proposées pour réduire l'émission des NOx.

Une première technique consiste à faire intervenir un agent réducteur sur les gaz émis afin que les NOx soient convertis en azote. Cet agent réducteur peut être de l'ammoniac mais cela induit des inconvénients tels que la difficulté de stocker et manipuler un tel produit. Il est également possible d'utiliser un gaz naturel comme agent réducteur, mais cela se fait au détriment de la consommation du four et augmente les émissions de CO₂. La présence de gaz réducteurs (monoxyde de carbone) dans certaines parties du four telles que les régénérateurs peut de plus provoquer une corrosion accélérée des réfractaires de ces zones.

Il est donc préférable de s'affranchir de cette technique en adoptant des mesures dites primaires. Ces mesures sont ainsi appelées car on ne cherche pas à détruire les NOx déjà formés, comme dans la technique décrite ci-dessus, mais plutôt à empêcher leur formation, par exemple au niveau de la flamme. Ces mesures sont en outre plus simples à mettre en oeuvre et, par conséquent, plus économiques. Elles peuvent toutefois ne pas se substituer complètement à la technique précitée mais venir la compléter avantageusement. Ces mesures primaires constituent de toute façon un préalable indispensable pour diminuer la consommation de réactifs des mesures secondaires.

On peut classer de manière non limitative les mesures existantes en plusieurs catégories :
- une première catégorie consiste à réduire la formation de NOx à l'aide de la technique dite de "reburning" par laquelle on crée une zone en défaut d'air au niveau de la chambre de combustion d'un four. Cette technique présente l'inconvénient d'augmenter la température au niveau des empilages de régénérateurs et, le cas échéant, de devoir prévoir une conception spécifique des régénérateurs et de leurs empilements, tout particulièrement en termes d'étanchéité et de résistance à la corrosion. De plus, cette technique produit une augmentation de la formation de monoxyde de carbone, lequel endommage les réfractaires en raison de son pouvoir réducteur;
- une deuxième catégorie consiste à agir sur la flamme en réduisant voire empêchant la formation des NOx à son niveau. Pour cela, on peut par exemple chercher à réduire l'excès d'air de combustion. Il est également possible de chercher à limiter les pics de température en maintenant la longueur de flamme, et à augmenter le volume du front de flammes pour réduire la température moyenne au sein de la flamme. Une telle solution est par exemple décrite dans les US6047565 et W09802386. Elle consiste en un procédé de combustion pour la fusion du verre, dans lequel l'alimentation en combustible et l'alimentation en comburant s'effectuent toutes deux de manière à étaler dans le temps le contact combustible/comburant et/ou à augmenter le volume de ce contact en vue de réduire l'émission des NOx.

Le EP921349 (ou US6244524) et la demande de brevet français n° 0754028 déposée le 26 mars 2007 ont proposé dans un but de réduction des NOx, un brûleur équipé d'au moins un injecteur, comportant un conduit d'amenée de combustible liquide, du type fioul, et un conduit d'amenée de fluide de pulvérisation disposé concentriquement par rapport audit conduit d'amenée de combustible liquide, ledit conduit d'amenée de combustible liquide comportant un élément percé de canaux obliques pour mettre le combustible liquide sous la forme d'un jet creux épousant substantiellement la paroi interne.

Le JP-A-2003269709 enseigne un procédé de chauffage de verre fondu dans un four à brûleurs transversaux équipé de régénérateurs et fonctionnant avec un combustible gazeux.

Le US4946382 enseigne un procédé de combustion d'un combustible liquide avec un comburant pouvant être de l'air enrichi en oxygène dans lequel le rapport de l'impulsion de l'oxygène sur l'impulsion du combustible est de 10 à 30.

L'invention s'adresse aux fours verriers équipés de brûleurs transversaux et de régénérateurs. Pour l'homme du métier, dans le cadre d'un four à brûleurs transversaux, le terme « brûleur » désigne la paire des ensembles injecteur/arrivée d'air se faisant face dans les parois latérales, également appelées piédroits. Un brûleur comprend donc deux injecteurs et deux arrivées d'air, mais chaque paroi latérale est équipée de l'un des injecteurs et de l'une des arrivées d'air, associés pour générer une flamme partant de l'une des parois latérales. En quelque sorte, chaque paroi latérale est équipée d'un demi-brûleur du brûleur, les deux demi-brûleurs étant placés en vis-à-vis dans les parois latérales. Bien entendu, un injecteur d'un demi-brûleur peut être divisé en plusieurs jets groupés participant à la même flamme, de sorte que le terme « injecteur » recouvre la notion de groupes d'injecteurs ou de groupe de conduits d'amenée.

Le but de l'invention est de contribuer à réduire les NOx en jouant sur la façon d'introduire comburant et combustible et plus particulièrement en jouant sur leur impulsion. Ainsi, l'invention concerne un procédé de chauffage de verre fondu par un four comprenant des parois latérales équipées de brûleurs transversaux et muni de régénérateurs, caractérisé en ce qu'au moins un brûleur transversal est alimenté en comburant comprenant moins de 30 vol % d'oxygène et en combustible, de sorte que le rapport de l'impulsion du comburant sur l'impulsion du combustible va de 5 à 13. On a en effet trouvé que le rapport R de l'impulsion du comburant sur l'impulsion du combustible était avantageusement choisi de 5 à 13. De manière préférée, R est supérieur à 6. De manière préférée, R est inférieur à 11 et même inférieur à 9,5. Notamment, R peut aller de 6 à 11 et même 6 à 9,5.

Le comburant est toujours en excès dans le cadre de la réaction de combustion. Les flammes générées sont oxydantes. Rappelons que l'impulsion d'une matière est le produit du débit massique de cette matière par sa vitesse, et s'exprime en Newton. On a en effet observé qu'à puissance de chauffe égale, ce rapport R avait une importance considérable sur la forme de la flamme, le trajet des fumées, les températures en voûte de four et dans le cerveau (partie supérieur du régénérateur surplombant les empilages de réfractaire ; « free space » en anglais) des régénérateurs ainsi que sur la qualité de transfert de chaleur au verre. En choisissant judicieusement ce rapport R, on a en effet constaté que les fumées de combustion pouvaient revenir en direction du brûleur sous la voûte du four en plaquant la flamme sur le verre. Ce plaquage de la flamme à la surface du verre améliore le transfert thermique de la flamme vers le verre. De plus, en raison de ce transfert maximum de chaleur au verre, la température de voûte reste raisonnable car les fumées de combustion ont été délestées d'un maximum de calories. Lorsque R est trop faible, la flamme est moins bien plaquée à la surface du verre. Les fumées de combustion forment aussi une boucle de circulation sous la voûte, plus petite, mais la température de voûte à tendance à être plus élevée. Lorsque R est trop fort, la flamme est bien plaquée au verre mais est en fait trop longue et son extrémité a tendance à lécher le piédroit (paroi latérale du four, « breastwall » en anglais) qui fait face à l'injecteur dont est issu la flamme, ce qui occasionne une détérioration dudit piédroit et la coulure du réfractaire dans le bain de verre produisant des défauts appelés « larmes » dans le verre final. Si R est particulièrement trop élevé, l'extrémité de la flamme peut même pénétrer dans le conduit du régénérateur qui fait face à l'injecteur dont est issu la flamme. Ceci a pour conséquence un moins bon transfert thermique au verre, une corrosion accélérée du conduit de régénérateur et du régénérateur lui-même, et une augmentation de la teneur en monoxyde de carbone.

Dans le cadre de la présente invention, le comburant est l'air ou l'air légèrement enrichi en oxygène de sorte que la teneur totale en oxygène dans le comburant est inférieure à 30 vol % et généralement inférieure à 25 vol%. Cette teneur totale en oxygène dans le comburant est supérieure à 15 vol %.

Le comburant est préchauffé avant de quitter son conduit d'amenée. Sa température est supérieure à 1200°C. Elle est généralement inférieure à 1500°C.

Dans le cadre de la présente invention, le combustible peut être liquide. Il peut s'agir d'un combustible fossile liquide couramment utilisé dans les dispositifs de combustion pour chauffer les matières vitrifiables dans un four de verrerie. Il peut par exemple s'agir de fioul lourd. Dans ce cas, un fluide de pulvérisation (comme l'air ou du gaz naturel) est utilisé pour pulvériser ledit combustible liquide. La pulvérisation d'un combustible liquide dans le four se fait par un injecteur. Un injecteur particulièrement adapté a été décrit dans la demande de brevet français n° 0754028 déposée le 26 mars 2007. Notamment, l'injecteur de pulvérisation du combustible liquide peut comprendre un conduit d'amenée de combustible liquide et un conduit d'amenée de fluide de pulvérisation, ledit conduit d'amenée de combustible liquide comprenant un élément percé de canaux obliques pour mettre ledit combustible sous la forme d'un jet creux en rotation avant éjection hors dudit injecteur, la génératrice de chacun desdits canaux formant un angle de moins de 10° avec la direction d'amenée du combustible liquide. Le combustible liquide est généralement injecté à une température comprise entre 100 et 150°C, de préférence encore entre 120 et 140°C. Le combustible liquide a généralement une viscosité au moins égale à 5.10⁻⁶ m²/s, notamment comprise entre 10⁻⁵ et 2.10⁻⁵ m²/s. Le combustible peut également être un gaz comme le gaz naturel, le méthane, l'air enrichi au butane, l'air enrichi au propane. Dans ce cas l'injecteur peut être du type à double impulsion gaz, c'est-à-dire comprenant deux arrivées concentriques de gaz combustible, une arrivée haute pression et une arrivée basse pression, comme décrit par exemple dans la demande de brevet français n° 0850701 déposée le 05 février 2008 . Il peut également être mixte, c'est-à-dire comprendre une arrivée de gaz combustible et une arrivée de liquide combustible, ces deux combustibles étant injectés alternativement ou simultanément. Un injecteur mixte a été décrit dans la demande de brevet français publiée sous le numéro FR2834774.

Généralement, l'injecteur est placé sous l'arrivée de comburant. L'arrivée de comburant est assurée par une ouverture de section relativement importante, dont l'aire peut notamment être comprise entre 0,5 et 2 m² au niveau de chaque paroi latérale (et donc par ½ brûleur), plusieurs injecteurs pouvant être associés à chaque arrivée d'air (notion de groupe d'injecteurs) de chaque ½ brûleur. Le conduit d'amenée du comburant présente une voûte inclinée vers le bas (dans le sens de circulation du comburant) pour que le comburant prenne une direction orientée vers la surface du bain de verre. La voûte du conduit d'amenée du comburant fait avec l'horizontale un angle allant de 18 à 30°. Le conduit d'amenée de combustible est généralement légèrement orienté vers le haut (dans le sens de circulation du combustible). Il fait un angle avec l'horizontale allant généralement de 3 à 12°.

Ainsi, les directions données au combustible et au comburant sont convergentes au moment ou combustible et comburant quittent leur conduit d'amenée respectif. L'angle formé entre la direction de la voûte du conduit d'amenée de comburant et la direction du conduit d'amenée de combustible est généralement compris entre 21 et 42°.

Le conduit d'amenée du combustible a une section beaucoup plus petite que celle du conduit d'amenée du comburant. Dans le cas d'un combustible liquide, cette section est généralement comprise entre 5 et 30 mm², étant entendu que cette section peut correspondre à celle d'un conduit unique ou à celle d'un groupe de conduits juxtaposés dans le cadre d'un même ½ brûleur d'une paroi latérale. Dans le cas d'un combustible gazeux, cette section est généralement comprise entre 3000 et 9000 mm² étant entendu que cette section peut correspondre à celle d'un conduit unique ou à celle d'un groupe de conduits juxtaposés d'un même ½ brûleur d'une paroi latérale. Le rapport de la section d'arrivée de comburant sur celui de la section d'arrivée de combustible (il peut s'agir de plusieurs arrivées de combustible, notamment 3 à 5 arrivées, sous la forme de plusieurs injecteurs d'un même groupe, participant à la même flamme) va généralement de 20 à 2.10⁵.

Chaque brûleur transversal du four a généralement une puissance allant de 4 à 12 mégawatts.

Les régénérateurs, bien connus de l'homme du métier, servent à récupérer de la chaleur des fumées de combustion. Ils sont constitués d'éléments réfractaires placés dans des compartiments séparés fonctionnant alternativement. Ces fours sont généralement équipés d'au moins trois bruleurs (comprenant chacun deux demi-brûleurs placés en vis à-vis et fonctionnant l'un après l'autre) et d'autant de régénérateurs que de ½ brûleur pour alternativement chauffer le comburant et collecter les fumées. Pendant qu'un ½ brûleur d'un brûleur de l'une des parois latérales fonctionne et produit une flamme dont le comburant est amené et chauffé par un premier régénérateur situé derrière ledit ½ brûleur, les fumées sont collectées et acheminées vers un deuxième régénérateur qui en récupère la chaleur, ledit deuxième régénérateur étant placé en face dudit ½ brûleur derrière l'autre paroi latérale. De manière cyclique, on inverse le fonctionnement des deux ½ brûleurs du même brûleur, en arrêtant le fonctionnement du premier ½ brûleur et en mettant en fonctionnement le deuxième ½ brûleur dont le comburant est amené et chauffé par le deuxième régénérateur (qui lors de l'étape précédente servait de collecteur de fumées). Le premier régénérateur sert alors de collecteur de fumées. On fait donc fonctionner le four dans un sens pendant un temps fixé (10 à 40 minutes par exemple) puis l'on inverse le fonctionnement du four. Dans le cas d'un four à brûleurs transversaux, les régénérateurs sont placés derrière les parois latérales du four.

La présente invention concerne tous types de four verrier à brûleurs transversaux, notamment pour la fusion du verre en vue de son formage en verre plat dans une unité de flottage. Le verre coule dans le four d'une paroi amont vers une paroi aval et entre deux parois latérales (piédroits). Les parois latérales (parallèles entre elles) équipées des brûleurs transversaux sont généralement distantes l'une de l'autre de 7 à 16 mètres. Les brûleurs équipent les piédroits par ensemble de deux ½ brûleurs placés en vis-à-vis. Le four comprend généralement de 3 à 10 brûleurs transversaux, c'est-à-dire que chaque piédroit comprend généralement 3 à 10 ensembles injecteur/arrivée de comburant (soit 6 à 20 ensembles d'injecteur/arrivée d'air en tout pour le four).

L'invention concerne également l'utilisation du procédé selon l'invention pour réduire l'oxyde d'azote (les NOx) dans les fumées de combustion d'un four verrier à régénérateurs.

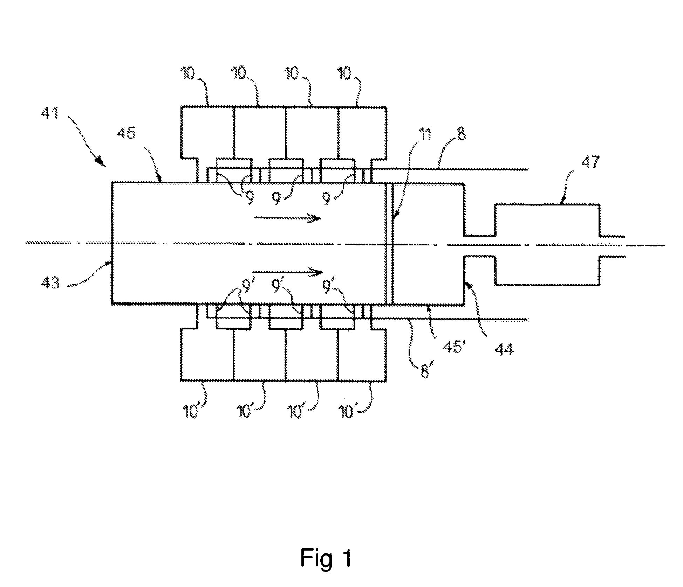

La figure 1 représente, vu de dessus, un four 41 de fusion de verre à brûleurs transversaux et régénérateurs. Le four 41 comprend une paroi amont 43, une paroi aval 44 et deux parois latérales (ou piédroits) 45 et 45'. Les matières vitrifiables sont introduites dès la paroi amont 43 par un dispositif habituel non représenté. Les matières vitrifiables fondues coulent de l'amont vers l'aval comme indiqué par les flèches. Dans le cas représenté, le verre passe dans une braise 47 à des fins de conditionnement thermique avant d'aller dans l'unité de transformation non représentée et pouvant être une installation de verre flotté pour la production de verre plat. Le four 41 est équipé au travers de ses deux parois latérales de quatre brûleurs, c'est-à-dire de deux rangées de quatre ½ brûleurs aériens fonctionnant l'un après l'autre. Chaque ½ brûleur aérien comprend un injecteur (ou groupe d'injecteurs) de combustible alimenté par les canalisations 8 et 8', et une arrivée d'air chaud 9 et 9'. L'injecteur (groupe d'injecteurs) est situé en dessous de l'arrivée d'air. Les ouvertures 9 et 9' jouent alternativement le rôle d'arrivée d'air chaud et celui de collecteur de fumées. Elles sont reliées chacune à un régénérateur 10, 10'. Lorsque les injecteurs de la paroi 45 fonctionnent, ceux de la paroi 45' ne fonctionnent pas. Les fumées passent à travers les ouvertures 9' de la paroi latérale 45' en face d'eux et leur chaleur est récupérée dans les régénérateurs 10. Au bout de quelques dizaines de minutes, on inverse le fonctionnement du four, c'est-à-dire que l'on arrête le fonctionnement des ½ brûleurs de la paroi 45 (arrêt de gaz combustible à travers la canalisation 8 et arrêt d'air à travers les ouvertures 9) et on met en route les ½ brûleurs aériens de la paroi 45' en alimentant ses injecteurs par la canalisation 8' et en alimentant en air chaud les arrivées d'air 9'. L'air est chaud grâce au réchauffement par les régénérateurs 10. Au bout de quelques dizaines de minutes, on inverse encore le fonctionnement du four et ainsi de suite (répétition du cycle d'inversion). Le four est ici muni d'un mur immergé 11 favorisant la formation de courroies de convection dans le verre fondu.

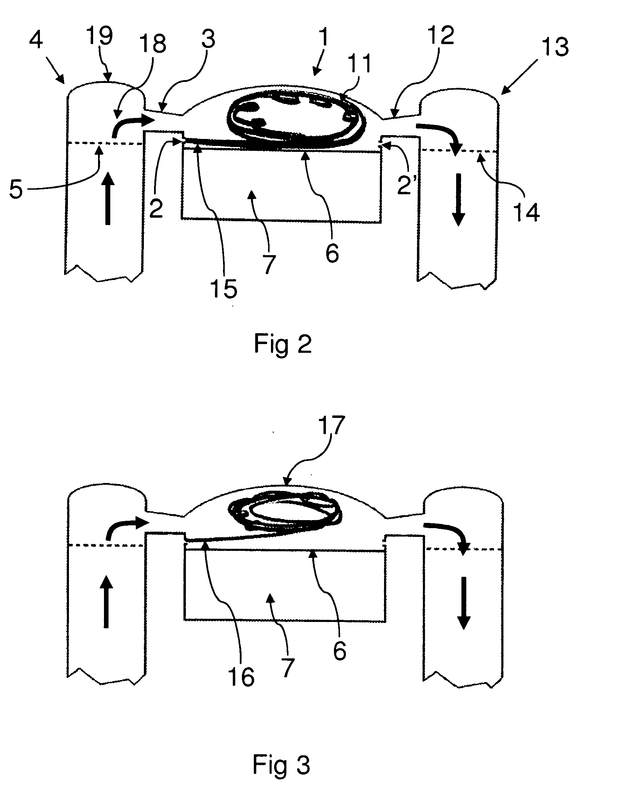

La figure 2 représente un four 1 à brûleurs transversaux, en coupe vu de côté dans l'axe d'écoulement du verre 7, le plan de coupe passant par un brûleur et deux régénérateurs. Le four est en cours de fonctionnement. Il contient un bain de verre 7 en fusion. Les injecteurs 2 et 2' (seul l'injecteur 2 est en fonctionnement sur la figure 2) sont placés en vis-à-vis dans les piédroits (parois latérales) du four. Une flamme 15 s'échappant du ½ brûleur de gauche, lequel comprend l'injecteur 2 et l'arrivée de comburant 3. Le comburant est réchauffé après passage dans le régénérateur 4 qui contient des empilements de réfractaire sous la ligne en pointillé 5, la partie du régénérateur au-dessus de cette ligne étant le cerveau 18 du régénérateur, ledit cerveau comprenant une voûte 19. Le comburant suit le trajet des flèches épaisses dans le régénérateur 4 et débouche dans le four au-dessus de l'injecteur 2. Ici, le rapport R est bien réglé entre 5 et 13 et la flamme est bien plaquée à la surface 6 du verre fondu 7. Les fumées de combustion 11 ont tendance à former une boucle de circulation au-dessus de la flamme en retour vers le brûleur d'où vient la flamme. Ce retour de fumée repousse la flamme vers le bas et la plaque favorablement à la surface du verre. Le transfert de chaleur au verre est optimal. Les fumées s'échappent par le conduit 12 du régénérateur 13 placé en vis-à-vis du brûleur en fonctionnement et suivent le trajet des flèches épaisses dans le régénérateur 13. Ces fumées chauffent les réfractaires du régénérateur 13 disposés sous la ligne en pointillé 14.
La figure 3 représente le même dispositif de chauffage du verre qu'à la figure 2, avec la même puissance de chauffe, sauf que le rapport R est inférieur à 5. Ici, la flamme 16 n'est pas bien plaquée à la surface 6 du verre 7. Le transfert de calories au verre est moins bon et en conséquence, la température de voûte 17 est plus élevée.

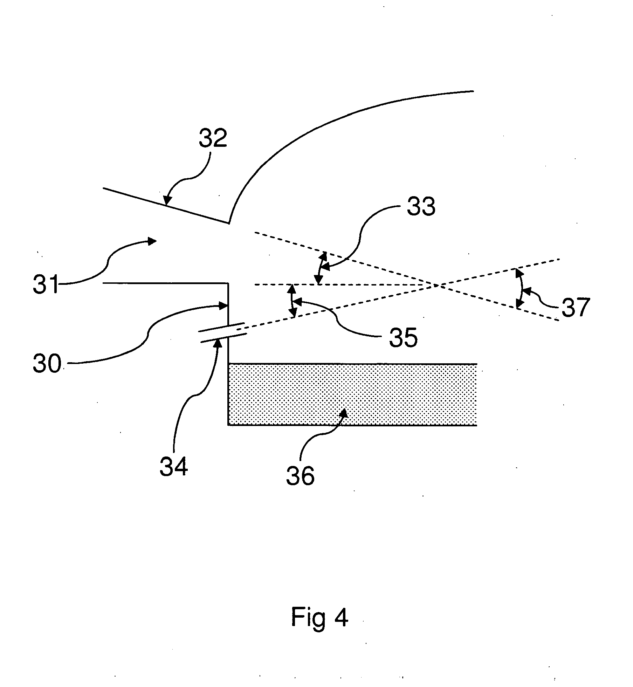

La figure 4 illustre les orientations données aux fluides comburant et combustible dans un piédroit 30 de four contenant un bain de verre en fusion 36. Le comburant débouche dans le four par un conduit 31 de grande section, la voute 32 dudit conduit étant orientée vers le bas et forme avec l'horizontale un angle 33 (18 à 30°). Le conduit d'amenée de combustible 34 est de petite section et forme avec l'horizontale un angle 35 (3 à 12°). Ainsi, les directions données au combustible et au comburant sont convergentes au moment ou combustible et comburant quittent leur conduit d'amenée respectif. L'angle 37 formé entre la direction de la voûte du conduit d'amenée de comburant et la direction du conduit d'amenée de combustible est la somme des angles 33 et 35 (ladite somme étant généralement comprise entre 21 et 42°).

### EXEMPLES 1-3

Les essais ont été réalisés sur un four verrier de 10,7 m x 33,5 m dont les piédroits étaient équipés de 7 brûleurs (14 groupes d'injecteurs, 14 arrivées d'air et 14 régénérateurs). On a fait varier l'impulsion de comburant de l'un des ½ brûleurs et analysé différents paramètres comme indiqué dans le tableau 1.

Tous les essais ont été réalisés à puissance égale, le combustible étant du fioul liquide. Les teneurs en NOx et en CO étaient mesurées dans le cerveau du régénérateur collectant les fumées.

On constate que le bon plaquage de la flamme avec un R intermédiaire dans le cas de l'exemple 2 se traduit par un minimum de température de voûte et un ensemble de paramètres excellents tant au niveau de la qualité du verre que de la nocivité des fumées (NOx et CO).

**Tableau 1 (Fioul liquide)**

| | **unité** | **Ex 1 (comp.)** | **Ex 2** | **Ex 3 (comp.)** |
|---|---|---|---|---|
| **Section arrivée air** | m x m | 1,7 x 1,25 | 1,7 x 0,5 | 1,5 x 0,26 |
| **Vitesse air** | m/s | 4 | 10 | 24,5 |
| **Débit air** | Nm³/h | 5830 | 5830 | 5830 |
| | Kg/s | 2,09 | 2,09 | 2,09 |
| **Impulsion air** | Newton | 8,4 | 20,9 | 51,3 |
| **Vitesse fioul** | m/s | 27 | 27 | 27 |
| **Débit fioul** | Kg/h | 500 | 500 | 500 |
| | Kg/s | 0,139 | 0,139 | 0,139 |
| **Impulsion fioul** | Newton | 3,8 | 3,8 | 3,8 |
| **R** | - | 2,2 | 5,6 | 13,5 |
| ***Température voûte four*** | °C | *1570* | *1530* | *1570* |
| ***Température voûte*** | °C | *> 1500* | *1490* | *> 1500* |
| ***régénérateur*** | | | | |
| ***NOx*** | *mg*/*Nm³ à 8% d'oxygène* | *800* | *650* | *500* |
| ***CO*** | *ppm* | *200* | *200* | *1800* |
| ***Position flamme*** | - | *Décollée du verre* | *Plaquée sur le verre* | *Plaquée sur le verre* |
| ***Qualité du verre*** | - | *Bonne* | *Bonne* | *Présence de bulles et larmes* |

### EXEMPLES 4-6

On procède comme pour les exemples 1-3, sauf que le combustible est du gaz naturel injecté par le biais d'un injecteur à double impulsion de gaz. On a fait varier les conditions de fonctionnement de l'un des ½ brûleurs dans les conditions compilées dans le tableau 2. Tous les essais ont été réalisés à puissance égale. On constate que le bon plaquage de la flamme avec un R intermédiaire dans le cas de l'exemple 5 se traduit par un minimum de température de voûte (four et régénérateur) et un ensemble de paramètres excellents tant au niveau de la qualité du verre que de la nocivité des fumées (NOx et CO).

**Tableau 2 (gaz naturel)**

| | **unité** | **Ex 4 (comp.)** | **Ex 5** | **Ex 6 (comp.)** |
|---|---|---|---|---|
| **Section arrivée air** | m x m | 1,7 x 1,25 | 1,7 x 0,5 | 1,5 x 0,28 |
| **Vitesse air** | m/s | 4,6 | 11,5 | 23,5 |
| **Débit air** | Nm³/h | 6110 | 6110 | 6110 |
| | Kg/s | 2,19 | 2,19 | 2,19 |
| **Impulsion air** | Newton | 10 | 25,2 | 51,4 |
| **Vitesse gaz** | m/s | 30 | 30 | 30 |
| **Débit gaz** | Nm³/h | 586 | 586 | 586 |
| | Kg/s | 0,13 | 0,13 | 0,13 |
| **Impulsion gaz** | Newton | 3,81 | 3,81 | 3,81 |
| **R** | - | 2,6 | 6,6 | 13,5 |
| ***Température voûte four*** | °*C* | *1590* | *1570* | *1570* |
| ***Température voûte*** | °*C* | 1535 | *1510* | > *1550* |
| ***régénérateur*** | | | | |
| ***NOx*** | *mg*/*Nm³ à 8% d'oxygène* | *950* | *800* | *700* |
| ***CO*** | *ppm* | *500* | *500* | *> 2000* |
| ***Position flamme*** | - | *Décollée du verre* | *Plaquée sur le verre* | *Plaquée sur le verre* |
| ***Qualité du verre*** | - | *Acceptable sauf présence localisée de grosses bulles (« bouillon » ou « blister » en anglais)* | *Bonne* | *Présence de bulles et larmes* |

## Revendications

1. Procédé de chauffage de verre (7) fondu par un four (1, 41) comprenant des parois latérales (45, 45') équipées de brûleurs transversaux et muni de régénérateurs, (4, 13, 10, 10') un brûleur transversal étant la paire des ensembles injecteur/arrivée d'air se faisant face dans les parois latérales (45,45') et fonctionnant l'un après l'autre, **caractérisé en ce qu'**au moins un brûleur transversal est alimenté en comburant comprenant moins de 30 vol % d'oxygène et en combustible, de sorte que le rapport de l'impulsion du comburant sur l'impulsion du combustible va de 5 à 13.

2. Procédé selon la revendication précédente, **caractérisé en ce qu'**au moins un brûleur transversal est alimenté en comburant et en combustible de sorte que le rapport de l'impulsion du comburant sur l'impulsion du combustible va de 6 à 11.

3. Procédé selon l'une des revendications précédentes, **caractérisé en ce que** le rapport de l'impulsion du comburant sur l'impulsion du combustible est inférieur à 9,5.

4. Procédé selon l'une des revendications précédentes, **caractérisé en ce que** le comburant comprend moins de 25 vol % d'oxygène.

5. Procédé selon l'une des revendications précédentes, **caractérisé en ce que** la voûte (32) du conduit (31) d'amenée du comburant fait avec l'horizontale un angle allant de 18 à 30°.

6. Procédé selon l'une des revendications précédentes, **caractérisé en ce que** l'angle formé entre la direction de la voûte (32) du conduit (31) d'amenée de comburant et la direction du conduit (34) d'amenée de combustible est compris entre 21 et 42 °.

7. Procédé selon l'une des revendications précédentes, **caractérisé en ce que** le rapport de la section d'arrivée de comburant sur celui de la section d'arrivée de combustible dudit brûleur va de 20 à 2.10⁵.

8. Procédé selon l'une des revendications précédentes, **caractérisé en ce que** les arrivées de comburant du brûleur transversal ont une section comprise entre 0,5 et 2 m² dans chaque paroi latérale (45, 45').

9. Procédé selon l'une des revendications précédentes, **caractérisé en ce que** ledit brûleur transversal a une puissance allant de 4 à 12 mégawatts.

10. Procédé selon l'une des revendications précédentes, **caractérisé en ce que** les parois latérales (45, 45') équipées des brûleurs transversaux sont distantes l'une de l'autre de 7 à 16 mètres.

11. Procédé selon l'une des revendications précédentes, **caractérisé en ce que** le four (1, 41) comprend 3 à 10 brûleurs transversaux.

12. Procédé selon l'une des revendications précédentes, **caractérisé en ce que** la teneur totale en oxygène dans le comburant est supérieure à 15 vol %.

13. Procédé selon l'une des revendications précédentes, **caractérisé en ce que** le brûleur est alimenté en combustible liquide.

14. Procédé selon la revendication précédente, **caractérisé en ce que** le brûleur comprend un injecteur de pulvérisation du combustible liquide comprenant un conduit d'amenée de combustible liquide et un conduit d'amenée de fluide de pulvérisation, ledit conduit d'amenée de combustible liquide comprenant un élément percé de canaux obliques pour mettre ledit combustible sous la forme d'un jet creux en rotation avant éjection hors dudit injecteur, la génératrice de chacun desdits canaux formant un angle de moins de 10° avec la direction d'amenée du combustible liquide.

15. Procédé selon l'une des revendications 1 à 12, **caractérisé en ce que** le brûleur est alimenté en gaz combustible.

16. Utilisation du procédé de l'une des revendications précédente pour réduire les NOx dans les fumées de combustion d'un four (1, 41) verrier à régénérateurs (4, 13, 10, 10').

## Claims

1. A method of heating molten glass (7) using a furnace (1,41) comprising side walls (45,45') equipped with transverse burners and fitted with regenerators (4,13,10,10'), a transverse burner denoting the pair of injector/air inlet sets that face one another in the side walls (45,45') **characterized in that** at least one transverse burner is supplied with oxidant comprising less than 30 vol% oxygen and with fuel such that the ratio of the impulse of the oxidant to the impulse of the fuel ranges from 5 to 13.

2. The method as claimed in the preceding claim, **characterized in that** at least one transverse burner is supplied with oxidant and with fuel such that the ratio of the impulse of the oxidant to the impulse of the fuel ranges from 6 to 11.

3. The method as claimed in one of the preceding claims, **characterized in that** the ratio of the impulse of the oxidant to the impulse of the fuel is less than 9.5.

4. The method as claimed in one of the preceding claims, **characterized in that** the oxidant comprises less than 25 vol% oxygen.

5. The method as claimed in one of the preceding claims, **characterized in that** the crown (32) of the oxidant supply pipe (31) makes, with the horizontal, an angle ranging from 18 to 30°.

6. The method as claimed in one of the preceding claims, **characterized in that** the angle formed between the direction of the crown (32) of the oxidant supply pipe (31) and the direction of the fuel supply pipe (34) ranges between 21 and 42°.

7. The method as claimed in one of the preceding claims, **characterized in that** the ratio of the oxidant inlet cross section to the fuel inlet cross section of said burner ranges from 20 to 2.10⁵.

8. The method as claimed in one of the preceding claims, **characterized in that** the oxidant inlets to the transverse burner have a cross section ranging between 0.5 and 2 m² in each side wall (45,45').

9. The method as claimed in one of the preceding claims, **characterized in that** said transverse burner has a power ranging from 4 to 12 megawatts.

10. The method as claimed in one of the preceding claims, **characterized in that** the side walls (45,45') equipped with the transverse burners are 7 to 16 meters apart.

11. The method as claimed in one of the preceding claims, **characterized in that** the furnace (1,41) comprises 3 to 10 transverse burners.

12. The method as claimed in one of the preceding claims, **characterized in that** the total oxygen content in the oxidant is greater than 15 vol%.

13. The method as claimed in one of the preceding claims, **characterized in that** the burner is supplied with liquid fuel.

14. The method as claimed in the preceding claim, **characterized in that** the burner comprises an injector that atomizes the liquid fuel, comprising the liquid fuel supply pipe and an atomization fluid supply pipe, said liquid fuel supply pipe comprising an element pierced with oblique passages to bring said fuel into the form of a rotating hollow jet before it is ejected from said injector, the generatrix of each of said passages forming an angle of less than 10° with the direction in which the liquid fuel is supplied.

15. The method as claimed in one of claims 1 to 12, **characterized in that** the burner is supplied with gaseous fuel.

16. The use of the method of one of the preceding claims to reduce NOx in the combustion flue gases of a glass furnace (1,41) with regenerators (4,13,10,10').

## Patentansprüche

1. Verfahren zum Erhitzen von Glas (7), das mittels eines Ofens (1, 41) verschmolzen wird, der Seitenwände (45, 45`) aufweist, welche mit Querbrennern ausgerüstet sind, und der mit Regeneratoren (4, 13, 10, 10`) ausgestattet ist, wobei ein Querbrenner das Paar aus den Injektor/Lufteinlass-Einheiten ist, die in den Seitenwänden (45, 45`) einander gegenüber liegen und nacheinander arbeiten, **dadurch gekennzeichnet, dass** wenigstens ein Querbrenner mit Sauerstoffträger, der weniger als 30 Vol.-% Sauerstoff enthält, und mit Brennstoff beaufschlagt wird, so dass das Verhältnis des Impulses des Sauerstoffträgers zum Impuls des Brennstoffs zwischen 5 und 13 liegt.

2. Verfahren nach dem vorstehenden Anspruch, **dadurch gekennzeichnet, dass** wenigstens ein Querbrenner mit Sauerstoffträger und mit Brennstoff beaufschlagt wird, so dass das Verhältnis des Impulses des Sauerstoffträgers zum Impuls des Brennstoffs zwischen 6 und 11 liegt.

3. Verfahren nach einem der vorstehenden Ansprüche, **dadurch gekennzeichnet, dass** das Verhältnis des Impulses des Sauerstoffträgers zum Impuls des Brennstoffs unter 9,5 liegt.

4. Verfahren nach einem der vorstehenden Ansprüche, **dadurch gekennzeichnet, dass** der Sauerstoffträger weniger als 25 Vol.-% Sauerstoff enthält.

5. Verfahren nach einem der vorstehenden Ansprüche, **dadurch gekennzeichnet, dass** das Gewölbe (32) der Sauerstoffträgerzuführleitung (31) mit der Horizontalen einen Winkel zwischen 18 und 30° einschließt.

6. Verfahren nach einem der vorstehenden Ansprüche, **dadurch gekennzeichnet, dass** der zwischen der Richtung des Gewölbes (32) der Sauerstoffträgerzuführleitung (31) und der Richtung der Brennstoffzuführleitung (34) gebildete Winkel im Bereich zwischen 21 und 42° liegt.

7. Verfahren nach einem der vorstehenden Ansprüche, **dadurch gekennzeichnet, dass** das Verhältnis des Sauerstoffträgereinlassquerschnitts zu dem des Brennstoffeinlassquerschnitts des Brenners zwischen 20 und 2.10⁵ liegt.

8. Verfahren nach einem der vorstehenden Ansprüche, **dadurch gekennzeichnet, dass** die Sauerstoffträgereinlässe des Querbrenners einen Querschnitt zwischen 0,5 und 2 m² in jeder Seitenwand (45, 45`) aufweisen.

9. Verfahren nach einem der vorstehenden Ansprüche, **dadurch gekennzeichnet, dass** der Querbrenner eine Leistung zwischen 4 und 12 Megawatt aufweist.

10. Verfahren nach einem der vorstehenden Ansprüche, **dadurch gekennzeichnet, dass** die mit den Querbrennern ausgerüsteten Seitenwände (45, 45') um 7 bis 16 Meter voneinander beabstandet sind.

11. Verfahren nach einem der vorstehenden Ansprüche, **dadurch gekennzeichnet, dass** der Ofen (1, 41) 3 bis 10 Querbrenner umfasst.

12. Verfahren nach einem der vorstehenden Ansprüche, **dadurch gekennzeichnet, dass** der Sauerstoffgesamtgehalt in dem Sauerstoffträger über 15 Vol.-% liegt.

13. Verfahren nach einem der vorstehenden Ansprüche, **dadurch gekennzeichnet, dass** der Brenner mit flüssigem Brennstoff beaufschlagt wird.

14. Verfahren nach dem vorstehenden Anspruch, **dadurch gekennzeichnet, dass** der Brenner einen Injektor zum Zerstäuben des flüssigen Brennstoffs umfasst, der eine Leitung zum Zuführen von flüssigem Brennstoff sowie eine Leitung zum Zuführen von Zerstäubungsfluid umfasst, wobei die Leitung zum Zuführen von flüssigem Brennstoff ein Element umfasst, das von schräg verlaufenden Kanälen durchbohrt ist, um den Brennstoff vor dem Ausstoßen aus dem Injektor in Form eines Hohlstrahls in Rotation zu versetzen, wobei die Mantellinie eines jeden der Kanäle mit der Zuführrichtung des flüssigen Brennstoffs einen Winkel von weniger als 10° einschließt.

15. Verfahren nach einem der Ansprüche 1 bis 12, **dadurch gekennzeichnet, dass** der Brenner mit Brenngas beaufschlagt wird.

16. Verwendung des Verfahrens nach einem der vorstehenden Ansprüche, um die NOx in den Verbrennungsabgasen eines Glasofens (1, 41) mit Regeneratoren (4, 13, 10, 10') zu reduzieren.
